# EUROPEAN PATENT SPECIFICATION

(11) **EP 1 349 324 B1**
(45) Date of publication and mention of the grant of the patent: **02.07.2008**
(21) Application number: 03006540.3
(22) Date of filing: 24.03.2003
(51) Int. Cl.: H04L 12/40, H04L 12/46, H04L 12/24, H04L 12/18

(54) **Integrated managing method for local area network switching devices**
Verfahren zur integrierten Verwaltung einer Vermittlungsanlage in einem lokalen Netz
Méthode de gestion intégrée pour des dispositifs de commutation de réseau local

(30) Priority: 28.03.2002 CN 02108606
(43) Date of publication of application: 01.10.2003
(73) Proprietor: Huawei Technologies Co., Ltd., Shenzhen, Guangdong 518057 (CN)
(72) Inventor: Mao, Guiquan, Huawei Service Centre Building, Shenzhen City, Guangdong Province 518057 (CN)
(74) Representative: Van den Heuvel, Henricus Theodorus

(56) References cited:
- WO-A-03/003656
- US-A- 5 793 975
- US-B1- 6 169 741
- US-B1- 6 360 260
- AL-SHAER E ET AL: "TOWARD INTEGRATING IP MULTICASTING IN INTERNET NETWORK MANAGEMENT PROTOCOLS" COMPUTER COMMUNICATIONS, ELSEVIER SCIENCE PUBLISHERS BV, AMSTERDAM, NL, vol. 24, no. 5/6, 15 March 2001 (2001-03-15), pages 473-485, XP001150258 ISSN: 0140-3664
- W. FENNER: "IGMPv2" NETWORK WORKING GROUP RFC, February 1997 (1997-02), pages 1-24, XP015008020

## Description

### Field of the Invention

The present invention relates to a managing method for network devices, more particularly to an integrated managing method for switching devices of Local Area Network (LAN).

### Background of the Invention

With the rapid development of LAN, more and more LAN switching devices, such as Ethernet switch, have been used. In order to save the cost of device management and maintenance, integrated management for the decentralized devices is needed. Traditional managing methods for switching devices of LAN are realized mainly by Simple Network-Management Protocol (SNMP). According to SNMP, Transmission Control Protocol or Internet Protocol (TCP/IP) are run between network management devices and managed switching devices of LAN to finish the managing and managed process. Concrete management is realized by agent process of the managed device side and management process of managing device side, alternation of managing information is carried out by the following 5 messages: a getting parameter request message (get-request), which is used to take one or more parameters from the agent process; a getting next parameter request message (get-request), which is used to take the next parameter of one or more parameters; a setting request message, which is used to set one or more parameters of the agent process; a getting response message, which is used to response for above three messages, and one or more parameters returns; a trap message, automatically sent by agent process, is used to inform the management process of management request. Said 5 messages are sealed in data packages of user datagram protocol (UDP) in the process of management, and are transferred.

Seen from above, the existing integrated managing method for switching devices of Local Area Network is based on TCP/IP protocol to realize, therefore managed switching devices need to have independent IP addresses, otherwise management and maintenance of switching devices are hardly to realize, if each switching device of network is allotted a management IP address, precious IP address resource is greatly wasted because of large amount of switching devices. For example, US-B-6 360 2601 discloses a method intended to allow a SNMP managed network device to initially transmit a TRAP frame, to search for a network managing device and to wait for a response frame from the network managing device, so as to achieve an automatic discovery for various management functions within the network. However, all the devices are required to support a TCP/IP protocol stack and to be configured with an IP address, and such an implementation has to waste numerous IP addresses and fails to manage those devices which can not support the TCP/IP protocol stack.

### Disclosure of the Invention

An object of the present invention is to provide an integrated managing method for switching devices of Local Area Network with saving IP address resource. In order to obtain above object, there is provided an integrated managing method for switching devices of Local Area Network, comprising steps of
1) the switching device broadcasting an applying register message including a location identification of the switching device to a port connected to the managing device, the managing device executing the register operation after receiving the applying register message, and sending a register response message to the switching device,
2) the switching device sending a handshake message to the managing device after receiving a successful register response message, the managing device sending a handshake response message to the switching device after receiving the handshake message, after the switching device receives the handshake response message, the switching device completing a handshaking process during which the managing device performing managing operations on the switching device; and
3) determining whether the handshaking is overtime, and if not, turn to step 2), otherwise returning to step 1);
wherein the messages communicated between the switching device and the managing device are in a two-layered format without an IP address configured for the switching device.

Said step 1) may further comprise: the switching device inserts location information of the switching device to the register message after receiving the register message, and transmits it.

Before said step 1) finishes the process of register, when it needs configuring data, the switching device may send a request configuring data message to the managing device, the managing device sends configuring data to the switching device sending request after receiving the message.
Said step 2) may further comprise: when the switching device does not receive the communicating response message within designated time, the operation of register starts again.
The two-layered message format comprises of public message head, managing message and Ethernet head with label 802.1Q;

Said public message head comprises the following fields:
version number, which is used to indicate version of current managing protocol;
C, which is used to indicate current message is response message or command message;
Type, which is used to differentiate integrated management from two-layered multicast group control message;
F, which is used to identify whether the frame serial number is effective;
R, which is used to identify whether the check sum is effective;
B, which is used to identify whether the feedback word is effective;
the frame serial number, which is used to indicate message serial number according to each network switching device;
check sum, which is used to check message data;
length of message, which is used to identify length of the message;
feedback word, which is used to indicate response the untouched feedback data by message;
media access control (MAC) for switching device (LAN Switch): which is used to identify managing MAC addresses of the switching device;
the first transmitting port number, the second transmitting port number, the third transmitting port number, the fourth transmitting port number, is respectively used to record the inlet port number after messages are transmitted by the switching device;
said managing message comprises:
   home command word, which is used to act as home command word of managing message;
   sub command word, which is used to act as sub command word of managing message; length of content, which is used to record length of content of the managing message; content of the managing message, which is used to record parameter and data carried in the managing message.

On the whole, compared with existing integrated managing method for network switching devices, in two-layered network environment of the present invention, the switching device can broadcast applying register message including address identification of present switching device on the port connecting the managing device, and after the switching device is successfully registered, the switching device sends handshake message to the managing device in timing, the managing device sends a communicating response message to the switching device after receiving the handshake message, therefore time communicating process between the managing device and the switching device is realized, in said time communicating process, the managing device operates on data query, data assignment and software upgrade according to requirement; therefore compared with existing integrated managing method for network switching devices, a prominent advantage of the present invention is realize the operation of integrated management and maintenance of network switching devices without configuring IP addresses for the switching device, and precious IP address resource is saved.

### Brief Description of the Drawings

Fig.1 is the flowchart of the embodiment of method according to the present invention;
Fig.2 is the processing chart of change of the transmitting port.

### Detailed Description

Now the present invention will be described in further detail with reference to the exemplary embodiments shown in the drawings.

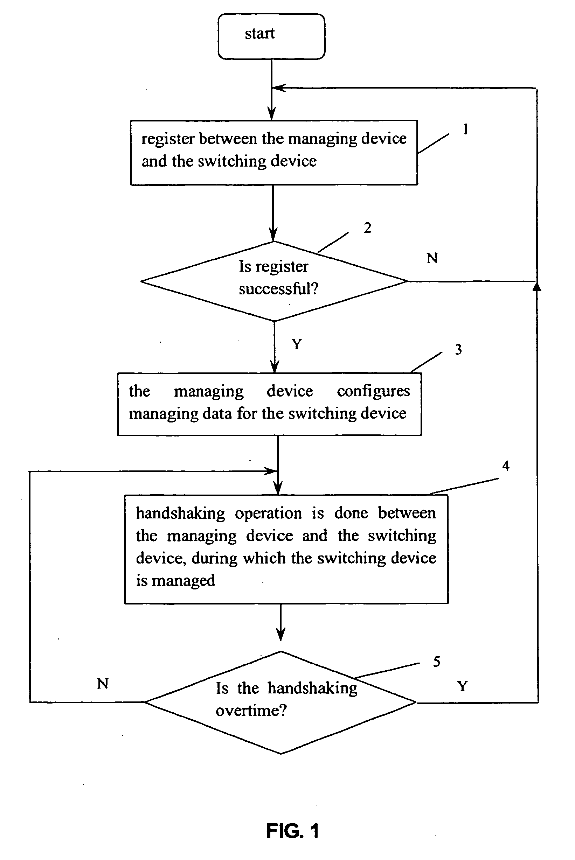

Fig. 1 is a flowchart of embodiment of the method according to the present invention. Integrated management for switching devices under two-layered network environment is realized by the embodiment of Fig.1. The embodiment of Fig. 1 works in the Client/Server mode, i.e. the managing device acts as Server, the switching device acts as Client, therefore, the managing Server software runs on the gathering device at higher network position, and Client runs on the managed switching devices such as network switch, a managing device can manage several switching devices simultaneously. To make the managing devices and the switching devices communicate by message, the present invention provides a special format of message comprising: Ethernet head with label 802.1 Q, public message head and managing message. Because the format of Ethernet head is known, public message head and managing message will now be further described in detail according to the embodiment.

### Public message can be carried behind the Ethernet head, referring to the following table:

| | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|
| | 3 | 3 | 2 | 2 | 2 | 2 | 2 | 2 | 2 | 2 | 2 | 2 | 1 | 1 | 1 | 1 | 1 | 1 | 1 | 1 | 1 | 1 | 9 | 8 | 7 | 6 | 5 | 4 | 3 | 2 |
| | 1 | 0 | 9 | 8 | 7 | 6 | 5 | 4 | 3 | 2 | 1 | 0 | 9 | 8 | 7 | 6 | 5 | 4 | 3 | 2 | 1 | 0 | | | | | | | | |
| 0 | version | | | | C | type | | | F | R | B | reservation | | | | | frame serial number | | | | | | | | | | | | | |
| 1 | check sum | | | | | | | | | | | | | | | | length of message | | | | | | | | | | | | | |
| 2 | feedback word | | | | | | | | | | | | | | | | MAC for switching device | | | | | | | | | | | | | |
| 3 | MAC for switching device | | | | | | | | | | | | | | | | | | | | | | | | | | | | | |
| 4 | the first transmitting port number | | | | | | | | the second transmitting port number | | | | | | | | the third transmitting port number | | | | | | | | the fourth transmitting port number | | | | | |
| 5 | reservation | | | | | | | | | | | | | | | | | | | | | | | | | | | | | |

Wherein:
version number, 4 bits, is used to indicate version of current managing protocol;
C field, which is response identification, 1 bits, is used to indicate current message is response message or command message; for example, 0------represents command (or request), 1-----represents response (or responding);
Type field, 3 bits, which is used to differentiate between integrated management and two-layered multicast group control message; for example, 000 represents integrated management of the switching devices, 001 represents multicast transmission for the switching devices;
F field, effective identification of the frame serial number, 1 bits, for example, the frame serial number is used when F=1;
R field, effective identification of the check sum, 1 bits, for example, the check sum is not used when R=0; and the check sum is used when R=1;
B field, effective identification of the feedback word, 1 bits, for example, the feedback word is not used when B=0; and the feedback word is used when B=1;
the frame serial number field, 16 bits, is used to identify message serial number according to each network switching device;
length of the check sum, is used to check message data, 16 bits, calculating method can be similar to IP and UDP, R field determines whether it is effective;
length of message field, 16 bits, is used to identify length of the message;
feedback word field, which is used to indicate response the untouched feedback data by message, 16 bits, untouched feedback data when responding messages;
media access control (MAC) for switching device, which is used to identify managing MAC address of the switching device;
the first transmitting port number, the second transmitting port number, the third transmitting port number, the fourth transmitting port number, is respectively used to record the inlet port number after the messages are transmitted by the switching devices; physical positions of the switching devices can be determined by the fields. Said effective range of port number is related to the port amount of some switching device, if the port amount of a switching device is PORT_NUM, when the switching device transmits the HGMP message of switching device of next layer, the range of transmitting port number is between 0 and PORT_NUM-1;
reservation field: 4 bytes, is used to expand function of messages, for example, cascade connection layer of the switching device is more than 5, the field can be used to define the transmitting port number.

Said managing message comprises the following, which is carried under the public message in practical appliance, referring to the following table:

| | | | |
|---|---|---|---|
| home command word | sub command word | length of content | content of the managing message |

Wherein:
home command word: 1 bit, which is used to act as home command word of managing message;
sub command word: 1 bit, which is used to act as sub command word of managing message;
length of content: 2 bit, which is used to record length of content of the managing message;
content of the managing message: which is used to record parameter and data carried in the managing message, the concrete format and size change according to appliance, and the length can be determined by the field of length of content. Usually, with the limitation of length of Ethernet, the field is no more than 1468 bytes: from 0 to 1468 bytes.

Seen from above, implementing the present invention according to Fig.1 comprises two processes, the first is the register of switching device, through which managing channel is founded between managing device and switching device; the second is the process of communicating, integrated management for switching devices is finished by communicating between managing device and switching device. The steps are as the following:

In step 1, the switching device broadcasts applying register message including address identification of present switching device on the port connecting the managing device, the managing device turn to the operation of register after receiving the message, and sends a register response message to the applying switching device, the switching device inserts location information of the switching device in the register message after receiving the register message, and transmits it; register between the switching device and the managing device is an alternate one to finish register of physical addresses and legal confirmation of switching device; in this step, when power on or reset, the switching device will automatically broadcast register message on predetermined port connecting the managing device, the message includes device identification of the switching device, if the switching device do not receive register response message of some managing device within designated time e.g., 30 seconds, then try to register again at intervals of 30 seconds until some managing device supply register response message.

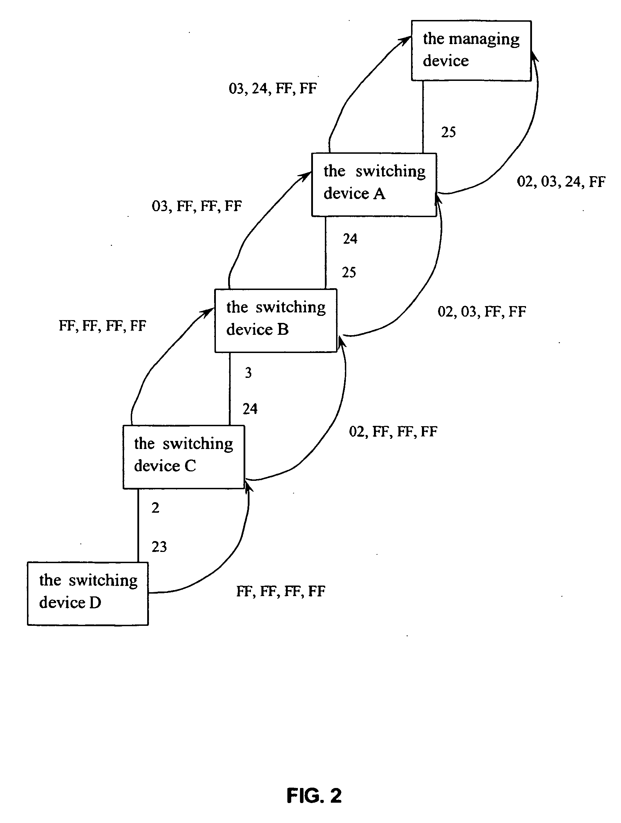

In step 1, when receiving the register message, the switching device processes the register message first, then transmits it, because the switching device is connected to the ports of the managing device in cascade connection, the managing device determines physical position of the switching device in network according to the register message of the switching message, and the physical position is provided by stage by stage serial of port of upper-layer switching device connected by the lower-layer switching device. Thus, the register message must be processed by the up ward switching device and insert information in the register message, then the register message is transmitted to up ward switching device to reprocessed until the managing device (referring to Fig.2). In Fig.2, when the switching device D sends register or multicast handshake message, transmitting ports in public message head are FF, FF, FF, FF, the switching device receives the message at port 2 and inserts 2 in the message and sends to device B, transmitting port changes to 02, FF, FF, FF, after receiving the message the switching device B inserts the receiving port 3 in the message and sends to the switching device A, the transmitting port changes to 02, 03, FF, FF, after receiving the message the switching device A inserts the receiving port 24 in the message and sends to the managing device, the transmitting port changes to 02, 03, 24, FF, the managing device insert its own receiving port after receiving the message, thus remember the position of device D.

After the switching device receives the register response message, implement step 2, determine whether the operation of register is successful according to the response message, if no, turn to step 1 to register again, if yes, the switching device is henceforth in charge of only the managing device, ignoring other possible managing device in the network, and records that which port of switching device does the register response message come from, and will not try to register until continuous trouble appears between the two.

Implement step 3 after registering successfully, go to the second-time alternation of message, the managing device distributes configuring data to the switching data. In this step, the managing device examines whether configuring data of switching device at this physical position is stored in itself, if yes, distribute configuring data; if no, the managing device distributes the order of using configuring default data to assign for the switching device. After the assignment is finished, report configuring end message, indicate if the assignment is successful, finish the process of assignment, at the same time write the number of communicating port of the switching device with the managing device. Then implement step 4, the switching device begins the operation of time communicating with the managing device. In this step, the switching device automatically sends handshake messages to the managing message in timing to ensure that the channel between the two is normal. Handshake messages comprise single-cast communicating and multicast communicating; there is certain time interval between the single-cast communicating and normal multicast communicating. In a process of normal communicating, the managing device manages the switching device; the switching receives command of the managing device and makes corresponding process, and returns the processed result to the managing device.

In step 4, because topology of the switching device perhaps changes in register and only single-cast communicating perhaps can not find it, multicast communicating is adopted, when the switching device transmits, multicast handshake message needs to insert position information in the register message, then transmits it.

In the process of normal communicating of step 4, implement step 5, the switching device determine whether communicating time is over time, if the system interrupts (e.g., caused by trouble of network connection or device), if communicating request of the switching device does not receive communicating response message of the managing device within a longer time such as 30 seconds, it means communication interrupts. The switching device stops the operation of communicating, changes register state of the switching device to unregistered, and startup of register process is done; if communicating time is not over time, then return to step 4.

The operation that the managing device manages the switching device mainly comprises querying data of the switching device, configuring process and the managing process for multicast group.

Said querying data of the switching device, configuring process are initiated by the managing device, the concrete steps are:
(61) the managing device distributes configuring parameter message or querying parameter message to the switching device according to the need of managing;
(62) the switching device receives said message, determines type of the message, if it is configuring parameter message, turn to step (63), if it is querying parameter message, turn to step (64);
(63) examining whether the configuring data of the message is right, if the configuring data is wrong, fill in error code in corresponding returning record; if the configuring data is right, the switching device is assigned with the configuring data, and the assigned result is reported to the managing device, then the operation ends;
(64) examining whether the querying parameter of the message is right, if the parameter is wrong, fill in error code in corresponding returning record; if the parameter is right, the switching device is queried according to the parameter, and the queried result is reported to the managing device, then the operation ends.

Said managing process of multicast group comprises processes of user entering multicast group, user leaving multicast group and the switching device transmitting two-layered multicast message;
said process of user entering multicast group can be realized by the following steps:
A1) Server sends general query message in Internet Group Management Protocol (IGMP) to side ports of all users; destination MAC address of the message is special, always 01-00-5E-00-00-01, destination IP address of the message is 224.0.0.1;
A2) Client intercepts all IGMP messages, when receiving general query message in IGMP from Server, e.g., the destination MAC address is the message of 01-00-5E-00-00-01, Client transmits the message to side physical ports of all up ward users;
A3) after all users receive the general query message in IGMP, the user wishing to receive some information of multicast group sends IGMP REPORT; destination IP address of the IGMP response message is IP of special multicast group, must be a IP address of D type, and the destination MAC address is multicast MAC address corresponding to special multicast group, whose format is 01-00-5E-**-**-**;
A5) after receiving IGMP REPORT from the user, Client directly sends it to Server transparently;
A6) after receiving IGMP REPORT from the user, Server determines whether the user can be admitted according to MAC address, VLAN ID of the user and multicast IP address that the user wants to enter, if no, lose it, otherwise Server transmits HGMP message that special user entering special multicast group, provided by the present invention, to Client;
A7) Client intercepts all HGMP messages, when receiving HGMP message that special user entering special multicast group, process to the following steps:
   a) look for physical port number of the user according to MAC address of the user of HGMP message;
   b) look for its own CAM table according to multicast MAC address of HGMP message, if list item of transmission of the multicast group is found in the table, Client inserts physical port number of the user in the transmitting interface table; if list item of transmission of the multicast group is not found in the table, the new list item of transmission of the multicast group is added, the upward port connecting Server and physical port number of the user are inserted in the transmitting interface table.

Thus, the process of a user entering the multicast group ends.

Said process of the user leaving the multicast group refers to the following steps:
B1) Server sending general query message in IGMP to side ports of all users in timing, Client will transmit the general query message in IGMP to all users;
B2) if receiving the IGMP REPORT, Server will process it according to the process of the user entering multicast group;
B3) when Server sends general query message in many continuous times but does not receive any IGMP REPORT relating to the multicast group from some port having entered the multicast group, then member of the multicast group will not exist in the port, therefore Server will delete the port from transmitting interface table of the multicast group, and send HGMP message deleting special multicast group to the port;
B4) when receiving HGMP message delete special multicast group, Client deletes transmission table relating to the multicast group;
B6) for the message of leaving multicast group, automatically sent by user, Client sends it to Server transparently, then Server processes the operation of user's leaving;
B7) Server sending query message of special multicast group, if Server does not receive REPORT message of special within designated time, then it indicates that user of the special multicast group does not exist at the port, therefore Server will delete the port from the transmitting interface table of the multicast group, and send HGMP message deleting special multicast group to the port;
B8) when receiving HGMP message deleting special multicast group, Client deletes the transmission table relating to the multicast group;

Because in fact multicast services (such as VOD, audio service) for users mostly belong to one-way appliance, only receiving multicast information is in consideration but not sending multicast message up ward. Transmitting multicast message is accomplished by Server with the cooperation of Client, said process of Client transmitting multicast message comprises:
C1) Server transmitting the multicast message to the switching device;
C2) Client being responsible for two-layered multicast transmission, Client looks for its own CAM table according to MAC address of the multicast group, if corresponding list item is not found, it indicates that the multicast group does not exist in the CAM table, Client loses the multicast message; otherwise, Client transmits to other ports except those receiving the multicast message according to multicast transmitting interface table, therefore the multicast message can be received by user.

Practical operation of managing device managing switching device further comprises process of data upgrading.

## Claims

1. An integrated managing method for a switching device (A, B, C, D) of a Local Area Network, comprising the steps of:
1) the switching device (A, B, C, D) broadcasting an applying register message including a location identification of the switching device (A, B, C, D) to a port (25) connected to a managing device, and the managing device executing the register operation after receiving the applying register message, and sending a register response message to the switching device (A, B, C, D) ;
2) the switching device (A, B, C, D) sending a handshake message to the managing device after receiving a successful register response message, the managing device sending a handshake response message to the switching device (A, B, C, D) after receiving the handshake message, after the switching device (A, B, C, D) receives the handshake response message, the switching device (A, B, C, D) completing a handshaking process, and the managing device performing managing operations on the switching device (A, B, C, D) during the handshaking process (4); and
3) the switching device (A, B, C, D) determining whether the handshaking is overtime (5), and if not, returning to step 2), otherwise returning to step 1),
**characterized in that** the messages communicated between the switching device (A, B, C, D) and the managing device are in a two-layered format without an IP address configured for the switching device (A, B, C, D).

2. The method according to claim 1, wherein step 1) further comprises a step of: a upper switching device (B, C, D) inserting its location information into the applying register message after receiving the applying register message from a lower switching device (A, B, C), and transmitting the applying register message upward.

3. The method according to claim 1, further comprising a step of between step 1) and step 3): when needing configuration data, the switching device (A, B, C, D) sending a configuration data request message to the managing device, which in turn sends the configuration data to the switching device (A, B, C, D) after receiving the configuration data request message.

4. The method according to claim 1, 2 or 3, wherein step 2) further comprises a step of:
when the switching device (A, B, C, D) does not receive the handshake response message within a predetermined period, restarting the register operation.

5. The method according to claim 4, wherein the two-layered message format comprises a public message head, a managing message, and an Ethernet head with a label 802.1Q; the public message head comprises following fields of:
a version number, indicative of a version of a current managing protocol;
C, indicative of whether a current message is a response message or a command message;
Type, which distinguishes an integrated management from a two-layered multicast group control message;
F, indicative of whether a frame serial number is valid;
R, indicative of whether a check sum is valid;
B, indicative of whether a feedback word is valid;
the frame serial number, indicative of a message serial number for each switching device (A, B, C, D);
the check sum, for a check of message data;
a message-length, indicative of the length of a message;
the feedback word, indicative of data returned by the response message without any change;
a Media Access Control for a switching device (A, B, C, D), indicative of a managing Media Access Control address of the switching device (A, B, C, D);
a first transmitting port number, a second transmitting port number, a third transmitting port number, and a fourth transmitting port number, respectively used to record an inlet port number (2, 3, 24, 25) after a message is transmitted through any switching device (A, B, C, D);
the managing message comprises:
a home-command word, serving as the home-command word of the managing message; a sub-command word, serving as the sub-command word of the managing message;
a content-length, which records the length of contents of the managing message; and
contents of the managing message, which records parameters and data carried by the managing message.

6. The method according to claim 5, wherein: in step 2), the managing operations comprise a process of configuration and query of the switching device (A, B, C, D), and the process is performed according to the following steps of:
61) the managing device distributing a parameter configuration message or a parameter query message to the switching device (A, B, C, D) as desired;
62) the switching device (A, B, C, D) receiving a message, determining the type of the message, if it is the parameter configuration message, going to step 63), and if it is the parameter query message, going to step 64);
63) checking whether the configuration data in the message is right, if the configuration data is wrong, filling an error code in a corresponding return record, if the configuration data is right, configuring the switching device (A, B, C, D) with the configuration data, and reporting a configuration result to the managing device; and
64) checking whether the query parameter in the message is right, if the parameter is wrong, filling an error code in a corresponding return record, if the parameter is right, querying the switching device (A, B, C, D) according to the parameter, and reporting a query result to the managing device.

7. The method according to claim 6, wherein in step 2), the managing operations comprise processes for a multicast group, including processes of a user's joining the multicast group, of the user's leaving the multicast group and of the switching device (A, B, C, D)'s transmitting a two-layered multicast message; the process of user's joining the multicast group comprises steps of:
A1) the managing device sending periodically a general query message of the Internet Group Management Protocol to all user-side ports (2, 3, 24; 23, 24, 25), and the switching device (A, B, C, D) receiving the general query message and transmitting the general query message to all downlink physical side ports (2, 23, 24);
A2) the user who wishes to receive the general query message sending a REPORT message, and the switching device (A, B, C, D) sending the REPORT message upward to the managing device after receiving the REPORT message from the user; and
A3) the managing device determining whether the user can enter a desired multicast group according to the REPORT message from the user, if not, discarding the REPORT message, otherwise transmitting a two-layered message for adding the user to the desired multicast group to the switching device (A, B, C, D), and the switching device (A, B, C, D) adding the user to the desired multicast group after receiving the message;
the process of the user's leaving the multicast group comprises steps of:
B1) the managing device sending periodically the general query message of the Internet Group Management Protocol to all the user-side ports (2, 3, 24; 23, 24, 25), and the switching device (A, B, C, D) transmitting the general query message to all the users after receiving the general query message;
B2) if the managing device sends the general query message but does not receive the REPORT message from a user of the multicast group for more than a designated number of times, transmitting to the device (A, B, C, D) a two-layered message for deleting the multicast group; and
B3) when the managing device receives a request message of leaving the multicast group sent initiatively by the user, transmitting downward a corresponding multicast group query message, and if no REPORT message is received from the multicast group within a designated period, transmitting to the device (A, B, C, D) a two-layered message for deleting the multicast group; and
the process of the switching device's transmitting the two-layered multicast message comprising:
C1) the managing device transmitting the two-layered multicast message to the switching device (A, B, C, D); and
C2) the switching device (A, B, C, D) determining whether the two-layered multicast message can be transmitted by itself, if not, discarding the two-layered message, otherwise transmitting the two-layered message to a port other than the one which has received the two-layered multicast message.

## Patentansprüche

1. Integriertes Managementverfahren für eine Schalteinheit eines lokalen Gebietsnetzwerkes (A, B, C, D), mit folgenden Schritten:
1) die Schalteinheit (A, B, C, D) sendet eine Anfrageregistermitteilung mit einer Platzidentifikation der Schalteinheit (A, B, C, D) zu einem mit einer Managementeinheit verbundenen Tor (25) und die Managementeinheit führt die Registerhandlung nach Empfang der Anfrageregistermitteilung aus und sendet eine Registerantwortmitteilung zu der Schalteinheit (A, B, C, D);
2) die Schalteinheit (A, B, C, D) sendet eine Handshakemitteilung zu der Managementeinheit nach Empfang einer erfolgreichen Registerantwortmitteilung, die Managementeinheit sendet eine Handshakeantwort zu der Schalteinheit (A, B, C, D) nach Empfang der Handshakemitteilung, und nachdem die Schalteinheit (A, B, C, D) die Handshakeantwort empfängt, vollendet die Schalteinheit (A, B, C, D) den Handshakeprozess, und die Managementeinheit führt Managementhandlungen in der Schalteinheit (A, B, C, D) während des Handshakeprozesses (4) aus;
3) die Schalteinheit (A, B, C, D) stellt fest, ob der Handshake verspätet ist (5), und wenn das nicht der Fall ist, kehrt sie zurück zu Schritt 2), sonst zu Schritt 1),
**dadurch gekennzeichnet, dass** die Mitteilungen zwischen der Schalteinheit (A, B, C, D) und der Managementeinheit in einem zweischichtigen Format erfolgen ohne eine für die Schalteinheit (A, B, C, D) konfigurierte IP-Adresse.

2. Verfahren nach Anspruch 1, wobei Schritt 1) weiter einen Schritt enthält, wobei eine obere Schalteinheit (B, C, D) ihre Speicherinformation in einer Anfrageregistermitteilung hinzufügt nach Empfang der Anfrageregistermitteilung von einer unteren Schalteinheit (A, B, C) und die Anfrageregistermitteilung nach oben sendet.

3. Verfahren nach Anspruch 1, das einen zusätzlichen Schritt zwischen Schritt 1) und Schritt 3) enthält, wobei die Schalteinheit (A, B, C, D) eine Konfigurationsinformationsanfragemitteilung zu der Managementeinheit sendet, wenn Konfigurationsinformation benötigt wird, die ihrerseits die Konfigurationsinformation zu der Schalteinheit (A, B, C, D) sendet nach Empfang der Informationsanfragemitteilung.

4. Verfahren nach Anspruch 1, 2 oder 3, wobei Schritt 2) weiter einen Schritt enthält, wobei das Registerverfahren neu gestartet wird, wenn die Schalteinheit (A, B, C, D) die Handshakeantwort nicht innerhalb einer vorher festgelegten Zeit empfängt.

5. Verfahren nach Anspruch 4, wobei das zweischichtige Mitteilungsformat einen öffentlichen Mitteilungskopf, eine Managementmitteilung und einen Ethernetkopf mit der Andeutung 802.1Q enthält;
wobei der öffentliche Mitteilungskopf folgende Felder enthält:
eine Versionsnummer, die die Version des heutigen Managementprotokolles anzeigt;
C, zeigt an, ob die heutige Mitteilung eine Antwortmitteilung oder eine Befehlsmitteilung ist;
Type, unterscheidet ein integriertes Management von einer zweischichtigen Crruppenkontrollmitteilung;
F, zeigt an, ob eine Rahmenseriennummer gültig ist;
R, zeigt an, ob eine Kontrollsumme gültig ist;
B, zeigt an, ob ein Rückmeldewort gültig ist;
die Rahmenseriennummer, die die Mitteilungsseriennummer für jede Schalteinheit (A, B, C, D) anzeigt;
die Prüfsumme, für eine Kontrolle der Mitteilungsinformation;
eine Mitteilungslänge, die die Länge einer Mitteilung anzeigt;
das Rückmeldungswort, das die Information anzeigt, die von der Antwortmitteilung ohne jede Änderung zurückgeschickt worden ist;
Eine Medienzugriffsteuerung für eine Schalteinheit (A, B, C, D) die eine Managing Medienzugriffsteuerungsadresse der Schalteinheit (A, B, C, D) anzeigt;
eine erste Sendetornummer, eine zweite Sendetornummer, eine dritte Sendetornummer und eine vierte Sendetornummer, die jeweils benutzt werden zur Registrierung einer Einlasstornummer (2, 3, 24, 25), nachdem eine Mitteilung durch eine der Schalteinheiten (A, B, C, D) gesendet wurde;
wobei die Managementmitteilung enthält:
ein Ausgangskommandowort, das als das Ausgangskommandowort der Managementmitteilung fungiert,
ein Subkommandowort das als Subkommandowort der Managementmitteilung fungiert, eine Gesamtlänge, die die Länge des Inhalts der Registrierung der Managementmitteilung registriert; und
Inhalt der Managementmitteilung, der die Parameter und von der Managementmitteilung mitgeführte Informationen trägt.

6. Verfahren nach Anspruch 5, wobei in Schritt 2) die Managementhandlungen einen Konfigurationsprozess und eine Befragung der Schalteinheit (A,B,C,D) enthalten und das Verfahren nach den folgenden Schritten ausgeführt wird:
61) die Managementeinheit verteilt je nach Wunsch eine Parameterkonfigurationsmitteilung oder eine Parameterbefragungsmitteilung an die Schalteinheit (A, B, C, D);
62) die Schalteinheit (A, B, C, D) empfängt eine Mitteilung, die die Art der Mitteilung bestimmt; wenn es die Parameterkonfigurationsmitteilung ist, weiter mit Schritt 63); und wenn es die Parameterbefragungsmitteilung ist, weiter mit Schritt 64);
63) Kontrollieren, ob die Konfigurationsinformationen in der Mitteilung richtig sind, wenn die Informationen falsch sind, Eintragen eines Fehlercodes in einen entsprechenden Rücklaufdatensatz, wenn die Informationen stimmen, Konfigurieren der Schalteinheit (A, B, C, D) mit den Konfigurationsinformationen, und Berichten eines Konfigurationsresultats an die Managementeinheit; und
64) Kontrollieren, ob der Befragungsparameter in der Mitteilung richtig ist, wenn der Parameter falsch ist, Ausfüllen eines Fehlercodes in einen entsprechenden Rücklaufdatensatz, wenn der Parameter richtig ist, Abfragen der Schalteinheit (A, B, C, D) gemäß dem Parameter und Berichten eines Abfrageergebnisses an die Managementeinheit.

7. Verfahren nach Anspruch 6, wobei in Schritt 2), die Managementhandlungen Verfahren für eine Multicast Gruppe enthalten, einschließlich Verfahren eines Benutzers, der der Multicast Gruppe beitritt, eines Benutzers, der die Multicast Gruppe verlässt, und der Schalteinheit (A, B, C, D), die eine zweischichtige Mitteilung sendet; wobei das Verfahren, bei dem Benutzer der Multicast Gruppe beitreten, die folgenden Schritte umfasst:
A1) die Managementeinheit sendet periodisch eine allgemeine Befragungsmitteilung des Internet Group Management Protokolls an alle Seitentore (2, 3, 24; 23, 24, 25) der Benutzer und die Schalteinheit (A, B, C, D) empfängt die allgemeine Befragungsmitteilung und sendet die allgemeine Befragungsmitteilung an alle abwärts gerichteten physischen Seitentore (2, 23, 24);
A2) der Benutzer, der die allgemeine Befragungsmitteilung zu empfangen wünscht, sendet eine REPORT Mitteilung, und die Schalteinheit (A, B, C, D) sendet die REPORT Mitteilung nach oben an die Managementeinheit nach Empfang der REPORT Mitteilung von dem Benutzer; und
A3) die Managementeinheit entscheidet, ob der Benutzer Zugang zu einer gewünschten Multicast Gruppe nach der REPORT Mitteilung des Benutzers erhalten kann, und wenn das nicht der Fall ist, Negieren der REPORT Mitteilung, andernfalls Senden einer zweischichtigen Mitteilung, um den Benutzer zu der gewünschten Multicast Gruppe zur Schalteinheit (A, B, C, D) hinzuzufügen, und die Schalteinheit (A, B, C, D) fügt den Benutzer nach Empfang der Mitteilung an die gewünschte Multicast Gruppe hinzu;
wobei der Vorgang, bei dem der Benutzer die Multicast Gruppe verlässt, die folgenden Schritte umfasst:
B1) die Managementeinheit sendet periodisch die allgemeine Befragungsmitteilung des Internet Group Management Protokolls zu allen Seitentoren (2, 3, 24; 23, 24, 25) der Benutzer, und die Schalteinheit (A, B, C, D) übermittelt nach Empfang der allgemeinen Befragungsmitteilung die allgemeine Befragungsmitteilung zu allen Benutzern;
B2) wenn die Managementeinheit die allgemeine Befragungsmitteilung sendet, jedoch die REPORT Mitteilung von einem Benutzer der Multicast Gruppe mehr als eine bestimmte Anzahl Male nicht empfängt, wird zur Vorrichtung (A, B, C, D) eine zweischichtige Mitteilung für das Löschen der Multicast Gruppe gesendet; und
B3) wenn die Managementeinheit eine Anfragemitteilung für das Verlassen der Multicast Gruppe empfängt, die auf Initiative des Benutzers gesendet worden war, wird eine entsprechende Multicast Gruppenanfragemitteilung nach unten gesendet, und, wenn keine REPORT Mitteilung von der Multicast Gruppe innerhalb einer bestimmten Zeit empfangen wird, wird zu der Schalteinheit (A, B, C, D) eine zweischichtige Mitteilung für das Löschen der Multicast Gruppe gesendet;
wobei das Verfahren der Schalteinheit, das die zweischichtige Multicast Mitteilung versendet, enthält:
C1) die Managementeinheit sendet die zweischichtige Multicast Mitteilung zu der Schalteinheit (A, B, C, D); und
C2) die Schalteinheit (A, B, C, D) stellt fest, ob die zweischichtige Multicast Mitteilung von selbst gesendet werden kann, und, wenn das nicht der Fall ist, Negieren der zweischichtigen Mitteilung, anderenfalls Senden der zweischichtigen Mitteilung zu einem anderen Tor als dem Tor, das die zweischichtige Multicast Mitteilung empfangen hat.

## Revendications

1. Procédé de gestion intégrée pour dispositif de commutation (A, B, C, D) de réseau local, comprenant les étapes consistant en ce que :
1) le dispositif de commutation (A, B, C, D) diffuse un message de demande d'enregistrement comprenant une identification de la localisation du dispositif de commutation (A, B, C, D), adressé à un port (25) relié à un dispositif de gestion et le dispositif de gestion exécute l'opération d'enregistrement après réception du message de demande d'enregistrement et envoie un message de réponse sur l'enregistrement au dispositif de commutation (A, B, C, D) ;
2) le dispositif de commutation (A, B, C, D) envoie un message d'établissement de liaison au dispositif de gestion après réception d'un message de réponse indiquant un enregistrement réussi, le dispositif de gestion envoie un message de réponse sur l'établissement de la liaison au dispositif de commutation (A, B, C, D) après réception du message d'établissement de liaison ; après que le dispositif de commutation (A, B, C, D) a reçu le message de réponse sur l'établissement de la liaison, le dispositif de commutation (A, B, C, D) réalise un processus d'établissement de liaison et le dispositif de gestion effectue des opérations de gestion sur le dispositif de commutation (A, B, C, D) durant le processus d'établissement de liaison (4), et
3) le dispositif de commutation (A, B, C, D) détermine si l'établissement de la liaison est hors délai (15) et si pas, revient à l'étape 2) ; autrement, il revient à l'étape 1),
**caractérisé en ce que** les messages communiqués entre le dispositif de commutation (A, B, C, D) et le dispositif de gestion sont dans un format à deux couches sans adresse IP configurée pour le dispositif de commutation (A, B, C, D).

2. Procédé selon la revendication 1, dans lequel l'étape 1) comprend par ailleurs une étape consistant en ce que : un dispositif de commutation de rang supérieur (B, C, D) insère ses informations de localisation dans le message de demande d'enregistrement après avoir reçu le message de demande d'enregistrement d'un dispositif de commutation de rang inférieur (A, B, C) et émet le message de demande d'enregistrement vers l'amont.

3. Procédé selon la revendication 1, comprenant par ailleurs une étape entre l'étape 1) et l'étape 3) consistant en ce que : quand il a besoin de données de configuration, le dispositif de commutation (A, B, C, D) envoie un message de demande de données de configuration au dispositif de gestion, lequel envoie quant à lui les données de configuration au dispositif de commutation (A, B, C, D) après réception du message de demande de données de configuration.

4. Procédé selon la revendication 1, 2 ou 3, dans lequel l'étape 2) comprend par ailleurs une étape consistant en ce que : lorsque le dispositif de commutation (A, B, C, D) ne reçoit pas le message de réponse sur l'établissement de la liaison dans un délai prédéterminé, il recommence l'opération d'enregistrement.

5. Procédé selon la revendication 4, dans lequel le format de message à deux couches comprend un en-tête de message public, un message de gestion et un en-tête Ethernet assorti d'une étiquette 802.1Q ;
l'en-tête de message public comprend les champs suivants :
un numéro de version, indicatif d'une version d'un protocole de gestion actif ;
C, qui indique si un message actif est un message de réponse ou un message de commande ;
Type, qui distingue une gestion intégrée d'un message de commande de groupe de multidiffusion à deux couches ;
F, qui indique si un numéro de série de trame est valide ;
R, qui indique si une somme de contrôle est valide ;
B, qui indique si un mot en retour est valide ;
le numéro de série de trame, indicatif d'un numéro de série de message pour chaque dispositif de commutation (A, B, C, D) ; la somme de contrôle, pour un contrôle des données d'un message ;
une longueur de message, indicative de la longueur d'un message ;
le mot en retour, indicatif de données renvoyées par le message de réponse sans aucun changement ;
une commande d'accès au support pour un dispositif de commutation (A, B, C, D), indicative d'une adresse de commande d'accès au support de gestion du dispositif de commutation (A, B, C, D) ;
un premier numéro de port d'émission, un deuxième numéro de port d'émission, un troisième numéro de port d'émission et un quatrième numéro de port d'émission utilisés, respectivement, pour enregistrer un numéro de port d'entrée (2, 3, 24, 25) après qu'un message a été transmis par le biais d'un quelconque dispositif de commutation (A, B, C, D) ;
le message de gestion comprend :
un mot de commande initiale, qui sert de mot de commande initiale du message de gestion ; un mot de sous-commande, qui sert de mot de sous-commande du message de gestion ; une longueur de contenus, qui enregistre la longueur des contenus du message de gestion, et les contenus du message de gestion, qui enregistrent les paramètres et données transportés par le message de gestion.

6. Procédé selon la revendication 5, dans lequel : à l'étape 2), les opérations de gestion sont constituées par un processus de configuration et d'interrogation du dispositif de commutation (A, B, C, D) et le processus est effectué selon les étapes suivantes consistant en ce que :
61) le dispositif de gestion distribue un message sur les paramètres de configuration ou un message sur le paramètre d'interrogation au dispositif de commutation (A, B, C, D) selon les besoins ;
62) le dispositif de commutation (A, B, C, D) reçoit un message, détermine le type du message ; si c'est le message sur les paramètres de configuration, il passe à l'étape 63) et si c'est le message sur le paramètre d'interrogation, il passe à l'étape 64) ;
63) il vérifie si les données de configuration dans le message sont bonnes ; si les données de configuration sont mauvaises, il place un code d'erreur dans l'enregistrement de retour correspondant ; si les données de configuration sont bonnes, il configure le dispositif de commutation (A, B, C, D) au moyen des données de configuration et communique un résultat de configuration au dispositif de gestion, et
64) il vérifie si le paramètre d'interrogation dans le message est bon ; si le paramètre est mauvais, il place un code d'erreur dans un enregistrement de retour correspondant ; si le paramètre est bon, il interroge le dispositif de commutation (A, B, C, D) conformément au paramètre et communique un résultat d'interrogation au dispositif de gestion.

7. Procédé selon la revendication 6, dans lequel à l'étape 2), les opérations de gestion sont constituées par des processus pour groupe de multidiffusion, dont des processus par lesquels un utilisateur se joint au groupe de multidiffusion, l'utilisateur quitte le groupe de multidiffusion et le dispositif de commutation (A, B, C, D) émet un message multidestinataire à deux couches, le processus par lequel un utilisateur se joint au groupe de multidiffusion, comprenant les étapes consistant en ce que :
A1) le dispositif de gestion envoie périodiquement un message d'interrogation générale du protocole de gestion de groupes Internet à tous les ports côté utilisateurs (2, 3, 24 ; 23, 24, 25) et en ce que le dispositif de commutation (A, B, C, D) reçoit le message d'interrogation générale et transmet le message d'interrogation générale à tous les ports physiques côté liaison vers l'aval (2, 23, 24) ;
A2) l'utilisateur qui souhaite recevoir le message d'interrogation générale, envoie un message REPORT et le dispositif de commutation (A, B, C, D) envoie le message REPORT vers l'amont au dispositif de gestion après avoir reçu le message REPORT de l'utilisateur, et
A3) le dispositif de gestion détermine si l'utilisateur peut entrer dans un groupe de multidiffusion voulu conformément au message REPORT émanant de l'utilisateur ; si pas, il rejette le message REPORT ; autrement, il transmet au dispositif de commutation (A, B, C, D) un message à deux couches pour ajouter l'utilisateur au groupe de multidiffusion voulu et le dispositif de commutation (A, B, C, D) ajoute l'utilisateur au groupe de multidiffusion voulu après réception du message ;
le processus par lequel l'utilisateur quitte le groupe de multidiffusion comprend les étapes consistant en ce que :
B1) le dispositif de gestion envoie périodiquement le message d'interrogation générale du protocole de gestion de groupes Internet à tous les ports côté utilisateurs (2, 3, 24 ; 23, 24, 25) et le dispositif de commutation (A, B, C, D) transmet le message d'interrogation générale à tous les utilisateurs après réception du message d'interrogation générale ;
B2) si le dispositif de gestion envoie le message d'interrogation générale, mais ne reçoit pas le message REPORT d'un utilisateur du groupe de multidiffusion plus qu'un nombre de fois défini, il transmet au dispositif (A, B, C, D) un message à deux couches pour effacer le groupe de multidiffusion, et
B3) quand le dispositif de gestion reçoit un message de requête pour quitter le groupe de multidiffusion envoyé de sa propre initiative par l'utilisateur, il transmet vers l'aval un message correspondant d'interrogation de groupe de multidiffusion et, si aucun message REPORT n'est reçu du groupe de multidiffusion dans un délai défini, il transmet au dispositif (A, B, C, D) un message à deux couches pour effacer le groupe de multidiffusion, et
le processus par lequel le dispositif de commutation transmet le message multidestinataire à deux couches consiste en ce que :
C1) le dispositif de gestion transmet le message multidestinataire à deux couches au dispositif de commutation (A, B, C, D), et
C2) le dispositif de commutation (A, B, C, D) détermine si le message multidestinataire à deux couches peut être transmis par lui-même ; si pas, il rejette le message à deux couches ; autrement, il transmet le message à deux couches à un port autre que celui qui a reçu le message multidestinataire à deux couches.
